Europäisches Patentamt

European Patent Office

Office européen des brevets

(11) Publication number: **0 388 271**
**A2**

# EUROPEAN PATENT APPLICATION

(21) Application number: 90400646.7

(22) Date of filing: 12.03.90

(51) Int. Cl.5: **G11B 7/00, G11B 7/013**

(30) Priority: 13.03.89 JP 57968/89

(43) Date of publication of application:
**19.09.90 Bulletin 90/38**

(84) Designated Contracting States:
**DE FR GB IT**

(71) Applicant: **NIKON CORPORATION**
**2-3, Marunouchi 3-chome Chiyoda-ku**
**Tokyo(JP)**

(72) Inventor: **Ishii, Yuuwa**
**5-9-4-304, Shinsaku, Takatsu-ku**
**Kawasaki-shi, Kanagawa-ken(JP)**

(74) Representative: **Schrimpf, Robert et al**
**Cabinet Regimbeau 26, Avenue Kléber**
**F-75116 Paris(FR)**

(54) **Apparatus for optically recording information signal onto a recording medium.**

(57) An apparatus for optically recording a digital signal onto a recording medium (18) movable relative to a light beam. The recording apparatus includes means (12) for modulation driving a light source (13) in accordance with the digital signal by a two-level modulation using a recording current for a high power level and a non-recording current for a low power level, and sub-modulating means (11) for periodically switching the power level of the light beam between the high power level and a level lower than the low power level in synchronism with a recording clocksignal by a modulating signal having a repetition period which is 1/n ($n$ is an integer of 2 or over) of a period corresponding to a minimum unit mark width $U_{min}$ predetermined correspondence to a minimum unit pulse width of the digital signal when forming a recording mark having a mark width of integral multiple of the minimum unit mark width by a localized heating effected by the light beam produced by the recording current. The duty ratio of the modulating signal for the sub-modulation purposes can be controlled in accordance with a linear velocity of the relative movement or an ambient temperature.

data D

AND

clock C

DRIVE

LASER

18

MOTOR —19

# F I G.1

EP 0 388 271 A2

# APPARATUS FOR OPTICALLY RECORDING INFORMATION SIGNAL ONTO A RECORDING MEDIUM

## BACKGROUND OF THE INVENTION

### 1. Field of the Invention

The present invention relates to a recording apparatus for writing information signals on a recording medium by means of light.

### 2. Description of the Prior Art

In a conventional recording apparatus of the type which writes information on a light-sensitive recording medium (e.g., an optical disc, optoelectromagnetic disc, optical card or optoelectromagnetic card) by means of a light beam movable relative to the recording medium, as shown for example in European Patent No.0288114, a high-intensity laser spot which is pulse modulated in correspondence to a digital data signal to be recorded is projected from a laser light source onto the recording medium and simultaneously the laser spot and the recording medium are moved relative to each other, thereby writing the digital data on the recording medium. Generally, this modulation of the laser spot is a two-level modulation between a relatively high power level which applies to the recording medium a localized heating sufficient for changing a physical characteristic, that is, an optical characteristic, magnetic characteristic or electric characteric of the recording medium and a relatively low power level having a controlled upper limit in heating so as to not change the physical characteristic of the recording medium. More specifically, a rectangular current of a pulse width corresponding to the digital data to be recorded is supplied to a laser diode to switch the energy density of the laser spot between the two levels. In this case, the energy density of the laser spot in the low power mode is only required to have a value in such range which does not increase the temperature of the irradiated portion of the recording medium to a medium temperature required for the recording or erasure of the data and therefore there are instances where the beam output power of the laser light source is substantially reduced to zero (i.e., the laser spot is extinguished) in the low power mode.

On the other hand, systems heretofore known for the recording of data include a mark position (pit position) recording system and a mark width (pit width) recording system, and the ISO (International Standards Organization) has adapted the mark position recording system as a standard for the recording systems of 5-inches optical discs owing to its advantage of being stable in recording. However, this mark position recording system is disadvantageous in that the recording density cannot be increased as compared with the mark width recording system. The reason is that in the case of the same recording density, there is the following relation between the minimum inversion time $T_1$ of a signal in the mark position recording system and the minimum inversion time $T_2$ of a signal in the mark width recording system with respect to the recording data, thus requiring the recording of a smaller mark in the case of the mark position recording system.

Therefore, from the recording density point of view, the use of the mark width recording system can be said desirable.

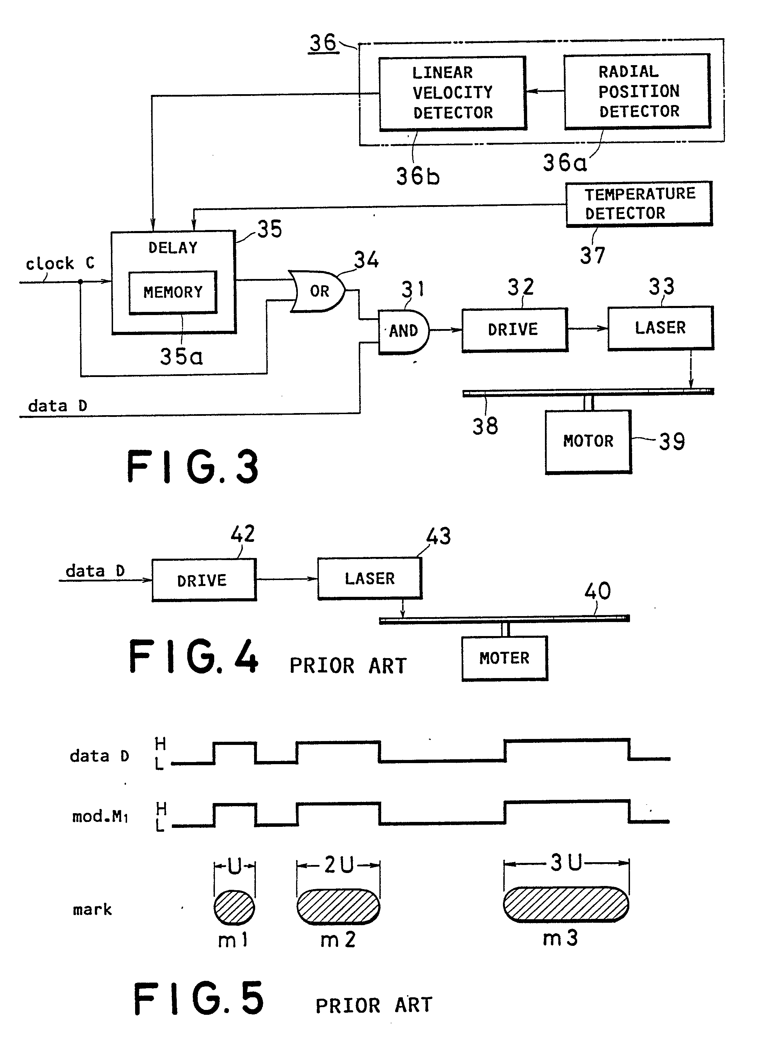

Referring now to Figs. 4 and 5, the recording principle of the above-mentioned mark width recording system will be described briefly in the light of the relation between a digital input signal and recording marks. Note that the details of the recording principle will be described later.

Fig. 4 illustrates a block diagram showing the construction of the principal part of the light source control unit for modulating a light source in a conventional recording apparatus employing the mark width recording system. Also, Fig. 5 shows the variations of the input data signal D and a light source modulating signal $M_1$ and the shapes of ideal marks formed of a recording medium in correspondence to the former signals.

The input data signal D is a rectangular signal whose high level H corresponds to recording and low level L corresponds to non-recording and after the amplification by a light source drive amplifier 42, the data signal D is applied as a light source modulation drive current $M_1$ of the corresponding signal waveform to a laser head (light source) 43. With the drive current $M_1$ applied to the laser head 43, the H level corresponds to a recording current value and the L level corresponds to a non-recording current value. It is assumed that the current values of these two-valued levels are predetermined as will be described later. The laser head 43 projected to a rotating recording medium 40 a spot of laser beem which becomes light and dark in correspondence to the two-valued or binary levels of the drive current M1. In other words, to record a single continuous mark on the recording medium, the spot of laser beem is continuously brightened over a period of time during which the recording current of the level H is generated.

The mark recorded on the recording medium under the abovementioned light source modulation is ideally formed for example into a shape as shown as a mark m1, m2 or m3 in Fig. 5. In the Figure, the mark m1 is one having the minimum mark width (pit width) allowed for the apparatus so that if this minimum mark width is indicated by a unit size 1U, the mark widths of the marks m2 and m3 (the sizes of the recording marks in the direction of movement, that is, the sizes in the circumferential direction of a disc if the recording medium 40 is a rotatable circular disc) are respectively 2U and 3U. Also, each of the marks m2 and m3 has an elongated slit shape as shown in the Figure due to the scanning by the previously mentioned continuously brightened spot of laser beam.

In this connection, it has been confirmed that in the above-mentioned mark width recording system, the energy density (crest value) of the laser beam spot projected onto the relatively moving recording medium (e.g., the medium is moved or the laser beam is moved) has an effect on the mark width of a recording mark in accordance with various conditions relating to the recording medium (e.g., the wavelength of the laser beam, the relative moving velocity of the laser beam and the recording medium and the material and kind of the recording medium). Thus, in order that a recording mark of a desired mark width corresponding to the input data signal D may be accurately formed on the recording medium, the current values corresponding to the two-valued levels H and L of the drive current $M_1$ have been predetermined so that the spot is projected with the optimum laser power in accordance with the previously mentioned conditions.

Then, while the mark width recording system is an excellect system from the recording density point of view as mentioned above, it has the following disadvantages.

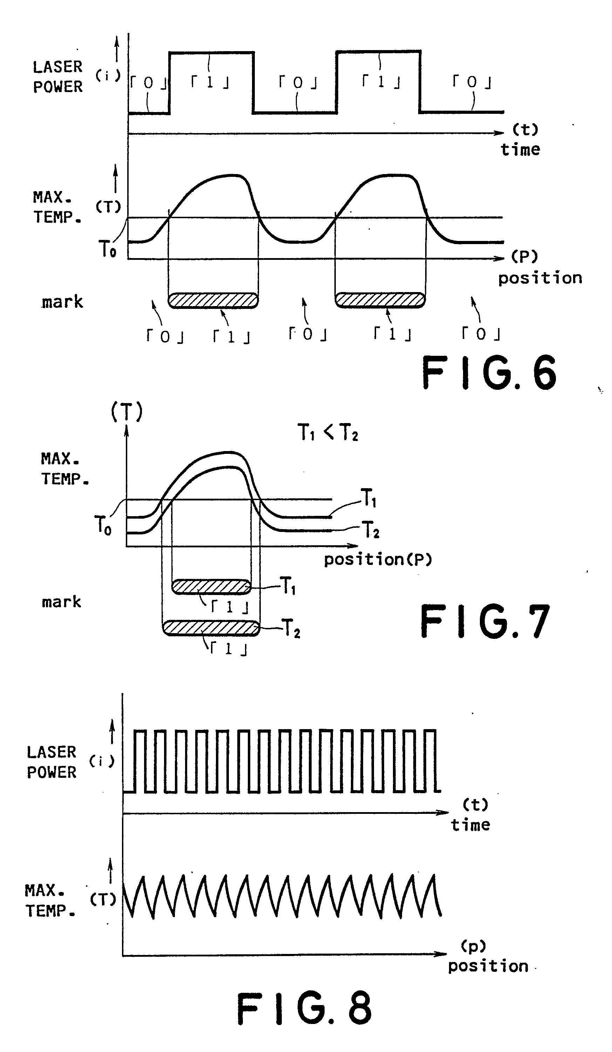

With the conventional techniques, where the optimum laser drive current has been set in accordance with the previously mentioned conditions, even if the switching between the two-valued levels of a laser power (i) to be projected on the recording medium is effected at high speeds, at each of the points on the recording layer of the recording medium along the direction of its movement the variation of a maximum temperature (T) by the projected laser spot involves a delay in response caused by a thermal time constant due to the thermal capacity, etc., of the recording medium as shown in Fig 6. This will be described in greater detail by taking the case of the photomagnetic recording as an example of the opto-thermal recording which writes information by heating a recording medium by a light beam. Where a laser beam of a laser power (i) varying in a pulse-like manner is projected onto the recording medium, as shown in Fig. 6, at each of the spot scanning positions on the recording layer of the recording medium moving relative to the projected laser spot the maximum temperature(T) varies with an inherent delay in response as mentioned previously. In the higher temperature portion of the recording medium than a recordable limit temperature To, the direction of magnetization is easily changeable in the recording layer or perpendicular magnetization film so that when the direction of perpendicular magnetization is reversed by the action of an externally separately applied magnetic field and the temperature of the recording layer is decreased due to the passage of the spot, the reversed magnetization direction is settled and a recording mark "1" (the reversed magnetization portion) is produced as shown by the hatching portion in Fig. 6, thereby producing, along with the original non-reversed magnetization portion "0", a two-level recording. It is to be noted that in the graph of the laser power (i) the abscissa represents the time (t) and in the horizonal graph of the temperature (T) the abscissa represents the position (P) on the recording medium at the corresponding scanning speed.

At this time, if the ambient temperature varies, the distribution of the maximum temperature (T) at the spot scanning position on the recording layer of the recording medium moving relative to the projected laser spot is shifted in the vertical axis direction as shown in Fig. 7. When this occurs, the mark width of the two-valued mark "1" determined by the crossing of the distribution profile of the maximum temperature (T) and the recordable limit temperature To with each other is varied as additionally shown in Fig. 7. In other words, even if the recording is effected by the same laser power, the mark width of a recording mark is extended when the ambient temperature rises to $T_1$ and the mark width is reduced when the ambient temperature drops to $T_2$. In other words, the optimum recording power has an ambient temperature dependence. Namely, in order to form a recording mark of the same mark width for each of the imput data pulses of the same pulse width irrespective of the ambient temperature, the laser power to be projected or the value of the laser drive current must be adjusted in accordance with variation of the ambient temperature. In addition, if the frequency of the input data signal is high and the laser power (i) varies at a short repetition period as shown in Fig. 8 thereby reducing the duration period of each pulse to an extent corresponding to the thermal time constant of the recording layer, the temperature variation in the recording layer of the recording medium can no longer follow the variation in the pulse width As a result, on the recording layer of the recording medium moving relative to the projected laser spot (in the case of an optical magnetic disc, it moves by its rotation) the variations in the distribution of the maximum temperature (T) at the spot scanning positions are such that both the high temperature portions (peaks) and the low temperature portions (bottoms) cannot reach their disired temperatures thereby decreasing the amplitude. Thus, there arises a problem that if the frequency of an input data signal increases, no accurate mark width can be obtained by using the optimum recording power at the low frequency as such, that is, there exists a recording frequency dependence of the optimum projection laser power.

As a result of excessive and insufficient input heats due to these ambient temperature dependence and recording frequency dependence of the optimum recording power, an undesired situation tends to occur in which the shape of each of the marks m1, m2 and m3 shown in Fig. 5 becomes such that in fact its mark width fails to correspond to the pulse width of the imput data signal or the mark width is expanded in the width direction of the spot scanning direction.

## SUMMARY OF THE INVENTION

It is therefore the primary object of the present invention to provide an improved recording apparatus of the type employing the mark width recording system for writing information signals on a recording material sensitive to light, which makes possible the formation of recording marks of excellent shapes and sizes through the improved ambient temperature dependence and recording frequency dependence of the optimum recording power.

In accordance with a basic aspect of the present invention there is thus provided an apparatus for optically recording information signals onto a recording medium sensitive to light, the apparatus including a light source for locally projecting a light beam onto the recording medium; means for moving the recording medium relative to the light beam; means for generating a series of consecutive recording clock signals of a predetermined frequency; light source drive means for modulating and driving the light source in response to a content of a digital input data signal in synchronism with the recording clock signals in accordance with a two-level modulation for switching between a recording current which maintains an output power level of the light beam at a predetermined high power level so as to apply to the recording medium a localized heating sufficient to form a recording mark by the change in a physical characteristic of the recording medium due to the localized projection of the light beam and a non-recording current for maintaining the output power level of the light beam lower than a predetermined low power level so as to substantially prevent the formation of a recording mark on the recording medium; and sub-modulating means for periodically switching the output power level of the light beam between the high power level and a level lower than the low power level in synchronism with the recording clock signals by a series of consecutive modulating signals having a repetition period which is 1/n (n is an integer greater than 2) of a period corresponding to a minimum unit mark width predetermined in correspondence to a minimum unit pulse width of the input data signal when forming on the recording medium a recording mark of a mark width which is an integral multiple of said minimum unit mark width.

In this case, the modulating signals of the sub-modulating means can be obtained by utilizing the recording clock signals. For instance, if the period of the recording clock signals is 1/2 of the minimum unit pulse width of the input data signal, the recording clock signals may be used as such as the desired modulating signals or alternatively the recording clock signals may be subjected to frequency division by a suitable frequency divider.

For a recording mark to be formed on the recording medium, there is a minimum resolution mark width which is determined by the maximum output value and response characteristic of the light source or the various conditions relating to the recording medium, that is, a limitation beyond which a recording mark of a minimum unit mark width to be recorded on the recording medium may be separated into more than one, and thus the minimum unit mark width is set to a value which is close to the minimum unit pulse width of the input data signal and N times (generally N is an integer of 1 or over) the minimum resolution mark width.

The minimum period of the modulating signals is limited by the minimum resolution mark width and therefore it is desirable to select the period of the modulating signals such that it is not shorter than the minimum resolution mark width.

In accordance with one aspect of the present invention, the sub-modulating means includes duty ratio variation means for varying the pulse duty ratio of the modulating signals.

According to one form, the duty ratio variation means is combined for example with velocity detecting means for detecting the linear velocity of the recording medium to vary the duty ratio in accordance with the detected velocity. In accordance with another form, the duty ratio variation means is additionally provided with temperature detecting means for detecting the ambient temperature of the recording medium to vary the duty ratio in accordance with the detected temperature.

In accordance with the recording apparatus of the present invention, when recording the respective recording marks in accordance with an input data signal, during the mark recording period for providing the minimum unit mark width of recording marks the light beam from the light source is periodically switched between the high power level and the level lower than the low power level by the function of the sub-modulating means and the light beam appears as if it is flickering during the mark recording period. Thus, in accordance with the present invention the sum of time durations during which the light beam output from the light source attains the high power level during the recording period of a recording mark is shorter than that of the conventional apparatus in which a recording mark of the same mark width is recorded by a continuous high power-level light beam. If the output power level of the light beam for the formation of recording marks is the same, in the case of the present invention the mark width with respect to an input data signal of a certain pulse width tends to be shorter than in the case of the conventional apparatus. As is well known in the art, however, the recording of a mark is effected adiabatically and the size of the mark to be recorded is proportional to a heat energy applied to the recording medium during the recording. Thus, if the output power level of a light beam projected from the light source for the formation of a recording mark is selected higher than in the case of the conventional apparatus, it is possible to form a desired recording mark of a given mark width. In other words, when forming a recording mark of the same mark width, in accordance with the invention the output power level of the light beam projected from the light source (the magnitude of the recording current) can be set higher than in the case of the conventional apparatus. For example, if the duty ratio of the modulating signals is 50 %, the energy density of the light beam at the high power level can be selected about two times the recording beam in the case of the conventional apparatus and thus the apparent thermal contrast between the recording and non-recording periods can be enhanced. As a result, the profile of the temperature distribution in the recording layer of the recording medium becomes sharp so that the size of a recording mark is stabilized against the ambient thermal effect and the previously mentioned ambient temperature dependence is improved. Also, in accordance with the present invention, in addition to the increased energy density of the light beam, the sum of the time durations during which the light beam from the light source attains the high power level during the recording period of a recording mark is reduced as compared with the case of the conventional apparatus, thereby improving the previously mentioned recording frequency dependence.

It is to be noted that since the modulating signals from the sub-modulating means are synchronized with the recording clock signal, during the mark recording period the ratio of the total time of the high power level states to the total time of the low power level states assumes the same value corresponding to the duty ratio of the modulating signals for each mark.

On the other hand, the duty ratio variation means is effective in cases where concentric recording tracks or a helical recording track is formed in a recording medium, e.g., a disc-type recording medium. More specifically, in this case the relative linear velocity of the light beam and the recording medium is varied in accordance with the radial position of the recording track. If recording marks are formed on the recording tracks of different linear velocities while maintaining the same duty ratio, the amount of input heat tends to be insufficient in the portions of the high linear velocities and conversely the amount of input heat becomes excessively large in the portions of the low linear velocities. Thus, as for example, the duty ratio variation means is combined with velocity detecting means for detecting the linear velocity of the recording medium so as to perform a compensating operation whereby in accordance with the detected velocity the duty ratio is changed to always ensure the formation of recording marks with the optimum amount of input heat.

The duty ratio variation means is also effective to compensate for variations in the ambient temperature. In other words, the mark width of a recording mark is increased with increase in the ambient temperature as previously mentioned in connection with Fig. 7 and conversely the mark width of a recording mark is reduced with decrease in the ambient temperature. In this case, it is possible to combine the duty ratio variation means with temperature detecting means for detecting the ambient temperature of the recording medium so that the duty ratio is changed in accordance with the detected temperature, thereby always ensuring the formation of a recording mark of the desired mark width irrespective of variation in the ambient temperature.

The above and other objects, features and advantages of the present invention will become more apparent from the following decription of its preferred embodiments taken in conjunction with the accompanying drawings.

BRIEF DESCRIPTION OF THE DRAWINGS

Fig. 1 is a schematic block diagram showing the construction of the principal part of a recording apparatus according to an embodiment of the present invention.

Figs. 2A and 2B show respectively the signal waveforms at various parts of the apparatus of Fig. 1 and the shapes of the corresponding recording marks in two exemplary operation.

Fig. 3 is a schematic block diagram showing the construction of the principal part of a recording apparatus according to another embodiment of the present invention.

Fig. 4 is a schematic block diagram showing the construction of the principal part of a conventional recording apparatus.

Fig. 5 shows a plurality of signal waveforms at various parts of the conventional apparatus and the shapes of the corresponding recording marks.

Fig. 6 shows the positional relation between the waveform of a light beam and the corresponding temperature distribution in the recording areas and recording marks in the conventional apparatus.

Fig. 7 shows the essential points of the variation in the size of recording marks due to variation in the ambient temperature in the conventional apparatus.

Fig. 8 shows the variations of the laser power and of the temperature.

DESCRIPTION OF THE PREFERRED EMBODIMENTS

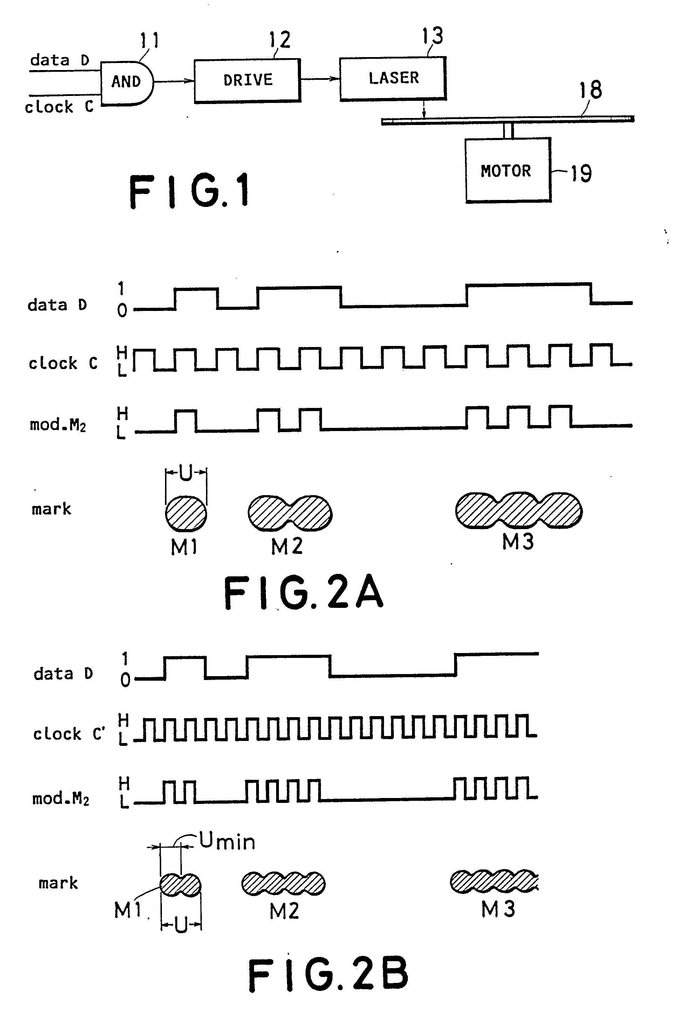

Referring to Fig. 1 showing a recording apparatus according to an embodiment of the present invention, the apparatus includes a disc-like recording medium 18 which is sensitive to light, a drive unit 19 for driving the recording medium 18 into rotation, a laser head 13 forming a light source which is shifted in the radial direction of the disc-like recording medium 18, a light source drive circuit 12 forming light source driving means for supplying a modulating drive current to the laser head 13, and an AND circuit 11 forming sub-modulating means for modulating the input signal to the light source drive circuit 12. It is to be noted that the recording apparatus further includes a disc driving speed controller, a laser head shift controller, a control unit for controlling the operating timings of the various parts, ets. These component parts are substantially the same with their counterparts in this type of recording apparatus and therefore their illustration and description will be omitted.

The AND circuit 11 receives for example an input data signal D and recording clock signals C serving as modulating signals for sub-modulation purposes so that a light source modulating signal $M_2$ corresponding to the logical product of the two input signals D and C is supplied to the light source drive circuit 12.

Fig. 2A shows the case where the minimum unit mark width U of a recording mark is selected substantially equal to the minimum unit pulse width of the input data signal D and in this case the recording clock signal C consists of a repetition pulse of a period which is about 1/2 of the minimum unit mark width U.

In this embodiment, the input data signal D is a so-called NRZI (non-return to zero I) signal. In other words, where binary signals "0" and "1" are respectively represented by an L level and H level, the "0" is represented by the presence of no change in the signal level (this may be either of the L and H levels) and the "1" is represented by an L - H transition of the signal level.

On the other hand, the light source modulating signal $M_2$ generated from the AND circuit 11 corresponds to the logical product of the input data signal D (NRZI signal) and the recording clock signal C and this light source modulating signal $M_2$ is a so-called RB (return to bias) signal. In other words, the "0" is represented by the L level and the "1" is represented by a level change L - H - L always returning the signal level to the L level.

The light source modulating signals $_M2$ (RB signal) generated from the AND circuit 11 are amplified by the light source drive circuit 12 and they are then applied to the laser head 13. The laser head 13 performs a two-level lighting in response to the light source modulating signals $M_2$. In this case, the laser head 13 projects a light beam by switching its output power level between the high and low levels in response to each recording clock signal C serving as a modulating signal during the recording of a single mark (during the time that the recording signals are continuously generated).

The resulting marks M recorded on the recording medium 18 under the above-mentioned light source modulation include for example those such as shown as marks M1, M2 and M3 in Fig 2A. These marks M1, M2 and M3 respectively correspond to the marks m1, m2 and m3 recorded by the conventional apparatus as shown in Fig. 5.

However, the shape of each of the marks M2 and M3 is equal to one recorded by adjoining marks of the uniform spot diameter in response to the arrival of the recording clock signals C of the period corresponding to the minimum unit mark width U as shown in Fig. 2A. This shows that as compared with the conventional slit-like marks m2 and m3, the input heat per minimum unit mark width of the recording mark is supplied satisfactorily and also this means that variation in the mark width or the mark width direction size tends to occur hardly. Then, the mark M1 of the mark width equal to the minimum unit mark width U is also recorded by switching the output power level of the light beam between the high and low levels and thus its spot shape is excellent as compared with the mark m1.

Fig. 2B shows the case where the minimum resolution mark width $U_{min}$ of the recording marks is 1/2 of the minimum unit mark width U and a recording clock signal $C'$ of the period corresponding to the mark minimum resolution mark width $U_{min}$ is supplied as a modulating signal for the sub-modulation purposes to the AND circuit 11. In this case, the same effects as the previously mentioned case of Fig. 2A are also obtained.

Fig. 3 shows another embodiment of the present invention This embodiment includes a construction for varying the duty ratio of the modulating signal for sub-modulation purposes.

In Fig. 3, a recording apparatus includes a disc-like recording medium 38 which is sensitive to light, a drive unit 39 for driving the recording medium 38 into rotation, a laser head 33 forming a light source which is shifted in the radial direction of the disc-like recording medium 38, a light source drive circuit 32 forming light source driving means for supplying a modulating drive current to the laser head 33, and an AND circuit 31 forming sub-modulating means for modulating the input signal to the light source drive circuit 32. It is to be noted that the recording apparatus further includes disc driving speed controller, a laser head shift controller, a control unit for controlling the operating timings of the various parts, etc. However, these component parts are substantially the same as their counterparts in the ordinary apparatus of this type and therefore their illustration and description will be omitted.

The recording apparatus further includes a velocity detecting circuit (velocity detecting means) 36, a temperature detecting circuit (temperature detecting means) 37, a delay circuit 35 (duty ratio variation means), and an OR circuit 34.

In Fig. 3, recording clock signals C serving as the basis for the modulating signals are applied to one input terminal of the OR circuit 34 and the delay circuit 35. The delay circuit 35 inparts a predetermined amount of delay to the clock signals C and applies them as the modulating signals to the other input terminal of the OR circuit 34.

The OR circuit 34 outputs the logical sum of its two inputs to the AND circuit 31 and thereafter the same signal processing operation as described with reference to Fig. 1 is performed.

However, this embodiment differs from the embodiment of Fig. 1 in that the duty ratio of the modulating signals for the sub-modulation purposes can be set arbitrarily in accordance with the predetermined amount of delay of the delay circuit 35. In this case, the duty ratio of the modulating signal is increased with an increase in the predetermined amount of delay thereby increasing the proportion of the high power period of the light beam projected from the laser head 33

In this connection, in order to always ensure the optimum duty ratio, the predetermined amount of delay for the delay circuit 35 can be variably controlled in accordance with the correlation between a preset amount of delay preliminarily determined by experiments and the previously mentioned recording conditions (e.g., the rate of change of the linear velocity of the recording medium and the variation in the ambient temperature of the recording medium). In this case, the desired preset amount of delay is supplied to the delay circuit 35 by memory means (not shown) preliminarily storing the correlations between the recording conditions to be compensated for and the optimum amounts of delay.

In Fig. 3, The velocity detecting circuit 36 is provided to detect the linear velocity of the recording medium 38 relative to the light beam and it is suitably constructed in accordance with the form and the driving system of the recording medium 38. For example, when considering a disc-like recording medium arranged so that the recording medium itself is rotated relative to a fixed laser beam position, the velocity detecting circuit 36 is constructed so that it includes a radial position detector 36a for detecting the radial position of the projected spot of the laser beam on the disc and a linear velocity detector 36b for detecting the linear velocity in accordance with the relation between the radial position and the linear velocity which is preliminarily determined according to the disc diameter. When the radial position of the laser beam spot is detected, the corresponding value of the linear velocity is outputted from the velocity detecting circuit 36 and applied to the delay circuit 35.

On the other hand, the temperature detecting circuit 37 includes sensor means arranged in a suitable position to detect the ambient temperature of the recording medium 38. The temperature detecting circuit 37 applies the detected temperature data to the delay circuit 35.

The delay circuit 35 includes an internal memory 35a preliminarily storing various amounts of delay for providing the optimum duty ratio based on the correlation according to the detected linear velocity and the detected temperature, so that in accordance with the inputted detected linear velocity and detected temperature the optimum amount of delay is read out and combined with the clock signal C, thereby outputting the resulting signal to the OR circuit 34. By thus performing the operation of compensating the output of the light beam against the variations of the linear velocity and the ambient temperature, the laser head 33 is allowed to produce the light beam always modulated with the optimum duty ratio in accordance with the variations of the linear velocity and the ambient temperature of the recording medium 38.

It is to be noted that while, in the embodiment of Fig. 3, the amount of delay is variably set in accordance with the detected linear velocity and the detected temperature, the amount of delay may be variabley set in accordance with one or the other of the detected linear velocity and the detected temperature. In this case, instead of incorporating an internal memory in the delay circuit, the similar internal memory may be incorporated in either one of the velocity detecting circuit and the temperature detecting circuit.

For instance, if the temperature detecting circuit 37 is eliminated in the embodiment of Fig. 3, an internal memory is incorporated in the linear velocity detecting circuit 36b of the velocity detecting circuit 36 and the correlation information between the radial positions and the optimum amounts of delay are stored in accordance with the disc diameter in the internal memory.

On the other hand, where the velocity detecting circuit 36 is eliminated in the embodiment of Fig. 3, the temperature detecting circuit 37 is provided with an internal memory storing the correlation information between the ambient temperatures and the optimum amounts of delay.

In any case, the embodiment of Fig.3 is capable of performing a compensating operation against variation in the linear velocity of the recording medium relative to the light beam or the ambient temperature of the recording medium or both of them, thereby always producing the optimum light beam output.

## Claims

1. An apparatus for optically recording an information signal onto a recording medium (18 ; 38) sensitive to light, comprising :
a light source (13 ; 33) for projecting a light beam onto said recording medium ;
means (19 ; 39) for moving said recording medium relative to said light beam ;
means for generating a series of consecutive clock signals C of a predetermined frequency ; and
light source drive means (12 ; 32) for modulating and driving said light source in response to a content of a digital input data signal D in synchronism with said recording clock signals in accordance to a two-level modulation for switching between a recording current which maintains an output power level of said light beam at a predetermined high power level so as to apply to the recording medium a localized heating sufficient to form a recording mark by a change in a physical characteristic of said recording medium due to said localized projection of said light beam and a non-recording current for maintaining the output power level of said light beam lower than a predetermined low power level so as to substantially prevent the formation of a recording mark on said recording medium,
characterized in that said apparatus further comprises sub-modulating means (11 ; 31) for periodically switching the output output power level of said light beam between said high power level and said level lower than said low power level in synchronism with said recording clock signals by a series of consecutive modulating signals having a repetition period which is 1/n (n is an integer of 2 or over) of a period corresponding to a minimum unit mark width U predetermined in correspondence to a minimum unit pulse width of said input data signal when forming on said recording medium said recording mark with a mark width of an integral multiple of said minimum unit mark width.

2. A recording apparatus according to claim 1, characterized in that said apparatus further comprises circuit means for supplying a series of consecutive signals based on said recording clock signals as said modulating signals of said sub-modulating means.

3. A recording apparatus according to claim 1, characterized in that the period of said modulating signals of said sub-modulating means is substantially equal to a minimum resolution mark width providing a limitation beyond which a record mark of said minimum unit mark width to be separated into more than one element.

4 A recording apparatus according to claim 1, characterized in that said minimum unit mark width is set to a value which is close to said minimum unit pulse width of said input data signal and which is N times (N is generally an integer of 1 or over) said minimum resolution mark width.

5. A recording apparatus according to claim 1, characterized in that said sub-modulating means includes duty ratio variation means (35) for varying a pulse duty ratio of said modulating signals.

6. A recording apparatus according to claim 5, characterized in that said apparatus further comprises velocity detecting means (37) for detecting a relative linear velocity of said recording medium, said duty ratio variation means (35) being adapted to vary said duty retio in accordance with said linear velocity.

7. A recording apparatus according to claim 5, characterized in that said apparatus further comprises temperature detecting means (37) for detecting an ambient temperature of said recording medium, said duty ratio variation means (35) being adapted to vary said duty retio in accordance with said ambient temperature.

8. A recording apparatus according to claim 5, characterized in that said apparatus further comprises velocity detecting means (36) for detecting a relative linear velocity of said recording medium and temperature detecting means (37) for detecting and ambient temperature of said recording medium, said duty ratio variation means being adopted to vary said duty retio in accordance with said relative linear velocity and said ambient temperature.

FIG.1

FIG.2A

FIG.2B

FIG.3

FIG.4   PRIOR ART

FIG.5   PRIOR ART

FIG.6

$T_1 < T_2$

FIG.7

FIG.8